# EUROPÄISCHE PATENTSCHRIFT

(11) **EP 0 906 737 B1**
(45) Veröffentlichungstag und Bekanntmachung des Hinweises auf die Patenterteilung: **16.04.2003**
(21) Anmeldenummer: 98115592.2
(22) Anmeldetag: 19.08.1998
(51) Int. Cl.: A47B 96/14, A47B 47/02, E04C 3/07, F16S 3/02

(54) **Stahlträgerprofil**
Sheet metal beam
Profilé en acier

(30) Priorität: 02.10.1997 DE 19743643
(43) Veröffentlichungstag der Anmeldung: 07.04.1999
(73) Patentinhaber: META-Regalbau GmbH & Co. KG, 59759 Arnsberg (DE)
(72) Erfinder: Angenendt, Huber, 59759 Arnsberg (DE)
(74) Vertreter: Fritz, Edmund Lothar, Dipl.-Chem.

(56) Entgegenhaltungen:
- DE-A- 3 513 382
- FR-A- 1 532 887
- US-A- 5 014 487

## Beschreibung

Die vorliegende Erfindung betrifft ein Stahlträgerprofil in Form eines Holms mit etwa kastenförmigem Querschnitt, wobei dieses hergestellt ist aus einem Bandeisen durch Profilieren. Bei solchen Stahlträgerprofilen ist man bestrebt, eine möglichst hohe Kraftaufnahme und Biegefestigkeit zu erreichen, bei gleichzeitig möglichst geringem Materialeinsatz. Wenn man einen einteiligen Kastenholm stabiler gestalten möchte, ist es der naheliegendste Weg, die Wandstärke größer auszubilden. Wird das Stahlträgerprofil aber durch Profilieren aus einem Bandeisen hergestellt, dann ist normalerweise die Materialstärke überall gleichmäßig groß und damit wird bei Erhöhung der Materialstärke ein entsprechend höherer Materialeinsatz notwendig.

Um dies zu Vermeiden hat man bereits sogenannte Schachtelholme entwickelt. Ein solcher Schachtelholm besteht im Prinzip aus zwei einzelnen Holmschalen, die jeweils für sich profiliert werden. Anschließend werden die profilierten beiden Holmschalen miteinander verschachtelt, d. h. so ineinandergelegt, daß sich die Holme in Teilbereichen überlappen. Dadurch hat man in diesen Überlappungsbereichen eine größere Materialstärke des fertigen Holms, während in den übrigen Bereichen und zwar dort, wo es nicht notwendig ist nur die einfache Materialstärke vorhanden ist. Man hat hier zwar den Vorteil eines geringeren Materialeinsatzes, aber es müssen zunächst zwei einzelne Holmschalen profiliert werden. Dies ist ein erhöhter Arbeitsaufwand, da im Prinzip die doppelte Länge an Bandeisen profiliert werden muss wie bei Herstellung eines Stahlträgerprofils aus nur einem Bandeisen.

Die US-A-5014487 beschreibt holmartige Stahlträgerprofile für Regale oder dergleichen, bei denen man eine höhere Stabilität dadurch erreicht, dass man das Stahlträgerprofil aus einem Ausgangsbandeisen z.B. durch Rollformen so verformt, dass das Bandeisen sich endseitig überlappt und somit in dem fertigen Stahlträgerprofil bereichsweise doppellagig liegt, so dass sich dort eine doppelte Wandstärke für das Profil ergibt.

Auch die DE-A-3513382 beschreibt ein aus einem Bandeisen herstellbares Profil, bei dem man das Bandeisen in mehreren Verformungsschritten so umformt, dass sich ein geschlossener Träger mit etwa kastenförmigen Profil ergibt, der in den Wänden Längsnuten aufweist. Zwei sich überlappende Enden des Bandeisens liegen in dem fertigen Profil flach aneinander und bilden eine Art Flansch. In diesem doppellagigen Bereich des Flanschs werden die Profillagen miteinander verschweißt, so dass sich dort eine doppelte Materialstärke ergibt. Bei beiden vorbekannten Stahlträgerprofilen wird ausgegangen von Bandeisen mit einer in sich gleichbleibenden Materialstärke. Die größere Materialstärke im endgültigen Profil ergibt sich nur dadurch, dass das Bandeisen in bestimmten Bereichen doppellagig liegt. Folglich lassen sich nur solche Profile herstellen, bei denen die Materialstärke bereichsweise das doppelte von der Materialstärke in den übrigen Bereichen des Profils beträgt. Nach diesem Verfahren ist es nicht ohne weiteres möglich, Stahlträgerprofile herzustellen, bei denen sich Bereiche mit größerer bzw. geringerer Materialstärke mehrfach abwechseln. Ebenfalls ist es nicht möglich, in bestimmten Bereichen etwa nur eine 1 ½ fache Materialstärke oder dergleichen zu wählen, wenn dies den statischen Anforderungen genügt.

Die Aufgabe der vorliegenden Erfindung besteht somit darin, Stahlträgerprofile der eingangs genannten Gattung mit größerer Stabilität und Belastbarkeit variabler zu gestalten, wobei sich diese bei möglichst geringem Materialeinsatz und vergleichsweise geringem Arbeitsaufwand profilieren lassen.

Die Lösung dieser Aufgabe liefert ein erfindungsgemäßes Stahlträgerprofil der eingangs genannten Gattung mit den kennzeichnenden Merkmalen des Hauptanspruchs. Erfindungsgemäß wird das Stahlträgerprofil aus einem Bandeisen in einem Profilierarbeitsgang hergestellt, wobei das resultierende Stahlträgerprofil dennoch in bestimmten Wandabschnitten eine größere Materialstärke aufweist als in den übrigen Wandabschnitten. Dabei sind sinnvoller Weise die Wandabschnitte mit größerer Materialstärke solche, die besonders zu einer Erhöhung des Biegemoments und somit der Belastbarkeit des Stahlträgerprofils beitragen. Vorzugsweise handelt es sich im Rahmen der Erfindung um einen hochkant angeordneten kastenförmigen Querschnitt des Stahlträgerprofils und die schmale obere Wand und/oder die schmale untere Wand weisen eine größere Materialstärke auf als einer oder mehrere der rechten bzw. linken Seitenwandabschnitte.

Gemäß der Erfindung kann man ein solches Stahlträgerprofil herstellen durch Profilieren eines Ausgangsbandeisens, das bereits Bereiche größerer Materialstärke und Bereiche geringerer Materialstärke hat. Dieses Ausgangsbandeisen ist also von vornherein so gewalzt und kann dann in nur einem Profilierarbeitsgang, der natürlich in der Regel wie bei den herkömmlichen Verfahren üblich mehrere Umformschritte umfaßt, zu dem gewünschten Stahlträgerprofil umgeformt werden. Gemäß einer Variante des erfindungsgemäßen Verfahrens formt man das Stahlträgerprofil wiederum aus einem einzigen Ausgangsbandeisen, daß so vorprofiliert wird, daß es im etwa mittleren Bereich eine Anformung z. B. in Form einer Schlaufe oder dergleichen aufweist. Anschließend wird dieses vorprofilierte Bandeisen weiterprofiliert und zwar vorzugsweise derart, daß die genannte Anformung des Ausgangsbandeisens im Bereich der unteren Wandung des profilierten Stahlträgerprofils mit etwa kastenförmigen Querschnitt liegt. Im Bereich dieser Anformung ist dann mehr Material vorhanden, was zu einer Erhöhung des Trägheitsmoments des fertigen Stahlträgerprofils führt.

Weiter profiliert man vorzugsweise bei dieser Variante das Bandeisen derart, daß sich jeweils Endbereiche des Ausgangsbandeisens teilweise überlappen und diese sich überlappenden Bereiche vorzugsweise im Bereich der oberen Wandung des fertigen Stahlträgerprofils liegen, so daß diese obere Wandung doppellagig ist. Dadurch erzielt man im Bereich dieser doppellagigen oberen Wandung eine zusätzliche Erhöhung des Trägheitsmoments des Stahlträgerprofils.
Die vorliegende Erfindung betrifft weiterhin ein Verfahren zur Herstellung eines Stahlträgerprofils mit etwa kastenförmigen Querschnitt, das Bereiche der Wandung mit größerer Materialstärke und Bereiche der Wandung mit geringerer Materialstärke aufweist. Aufgabe der Erfindung ist es, ein Verfahren zur Herstellung eines solchen Stahlträgerprofils zu schaffen, das einfacher ist als die bislang bekannten Verfahren. Die Lösung liefert ein erfindungsgemäßes Verfahren der genannten Art mit den Merkmalen des Anspruchs 2. Das erfindungsgemäße Verfahren ermöglicht die Herstellung von Stahlträgerprofilen mit guten statischen Querschnittswerten und daher gutem Tragverhalten bei gleichzeitig minimalem Materialeinsatz was zu einer Verringerung des Gewichts solcher Stahlträgerprofile führt. Das erfindungsgemäße Verfahren ermöglicht weiter eine einfache und rasche Herstellung dieser Stahlträgerprofile und führen daher zu verringerten Fertigungskosten. Stahlträgerprofile dieser Art können beispielsweise im Regalbau zur Anwendung kommen. Beispielsweise kann man diese für Regalholme von Palettenregalen verwenden, wo naturgemäß hohe Anforderungen an die Tragfähigkeit bestehen. Die in den Unteransprüchen 3 und 4 bzw. 5 und 6 genannten Merkmale betreffen Weiterbildungen des erfindungsgemäßen Stahlträgerprofils beziehungsweise des Herstellungsverfahrens. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
- Fig. 1: einen Querschnitt durch ein erfindungsgemäßes Profil;
- Fig. 2: einen Querschnitt durch ein Bandeisen aus dem ein Profil gemäß Fig. 1 hergestellt wird;
- Fig. 3: einen Querschnitt durch ein Bandeisen das als Ausgangsmaterial zur Herstellung eines Profils gemäß einer weiteren Variante der Erfindung dient.
- Fig. 4: einen Querschnitt durch ein erfindungsgemäßes Profil gemäß einer weiteren Variante der Erfindung.
- Fig. 5: zeigt eine mögliche Anwendung eines in Fig. 4 dargestellten Stahlträgerprofils z. B. im Regalbau.

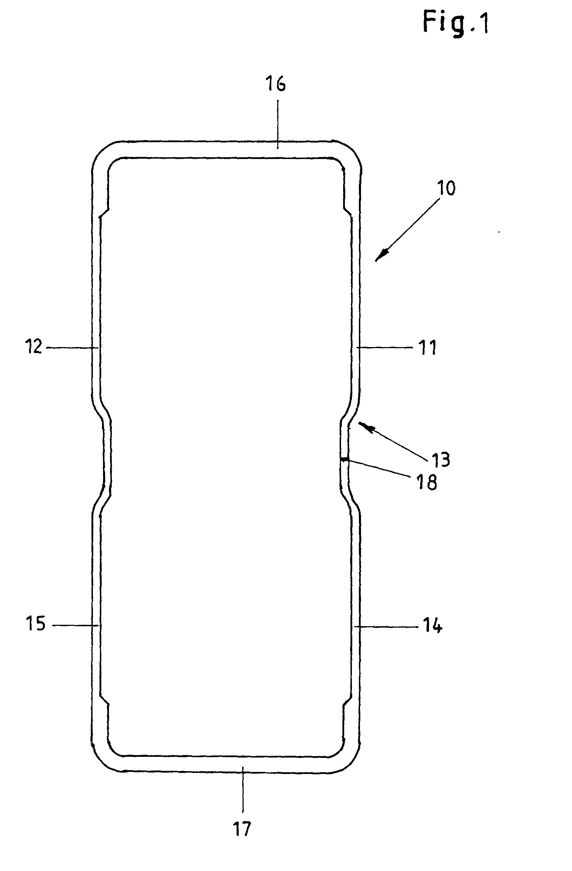

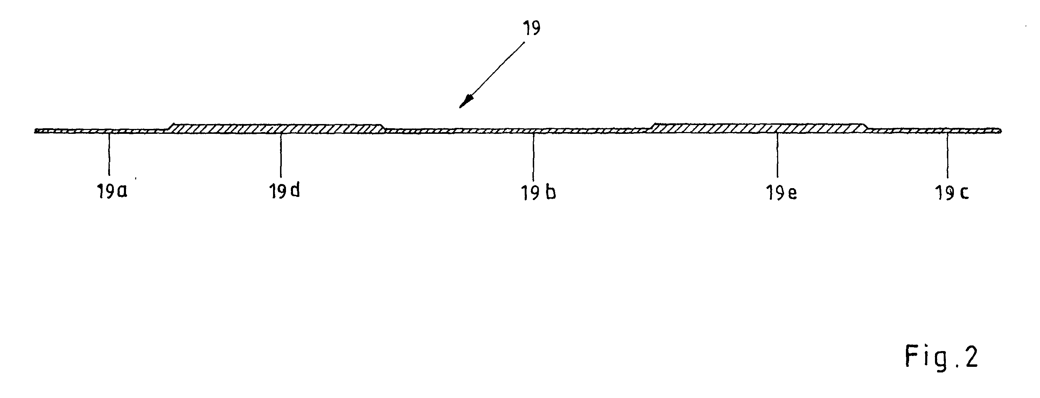

Zunächst wird auf Fig. 1 und 2 Bezug genommen und anhand dieser eine erste Ausführungsvariante der vorliegenden Erfindung näher beschrieben. Fig. 1 zeigt einen Querschnitt durch ein erfindungsgemäßes Profil 10. Dieses wird hergestellt ausgehend von einem Bandeisen 19 wie es in Fig. 2 im Querschnitt dargestellt ist. Dieses Bandeisen 19 hat insgesamt fünf Abschnitte, nämlich zwei äußere Abschnitte 19a bzw. 19c mit einer geringeren Materialstärke und einem mittleren Abschnitt 19b mit ebenfalls der gleichen geringeren Materialstärke. Jeweils zwischen den Abschnitten 19a und 19b mit geringerer Materialstärke liegt ein Abschnitt 19d mit größerer Materialstärke. Ebenso liegt zwischen dem mittleren Abschnitt 19b und dem in der Zeichnung rechten äußeren Abschnitt 19c mit geringerer Materialstärke ein Abschnitt des Bandeisens 19 mit größerer Materialstärke 19e.

Nun wird aus dem in Fig. 2 dargestellten Bandeisen 19 z. B. durch Rollformen ein Profil 10 hergestellt wie es in Fig. 1 dargestellt ist. Das Rollformen erfolgt in der Regel in mehreren aufeinanderfolgenden Arbeitsgängen bis das fertige Profil gewalzt ist.

Das fertige Profil 10 ist in Fig. 1 dargestellt. Wie man sieht handelt es sich um ein annähernd rechteckiges Profil 10 mit einer oberen Wand 16 und einer unteren Wand 17 sowie zwei Seitenwänden. Sowohl die rechte Seitenwand als auch die linke Seitenwand haben etwa im mittleren Bereich zur Stabilisierung des Profils je eine Sicke 13. Dadurch besteht die rechte Seitenwand aus einem oberen Seitenwandabschnitt 11 oberhalb der Sicke 13 und einem unteren Seitenwandabschnitt 14 unterhalb der Sicke 13. Ebenso besteht die linke Seitenwand aus einem oberen Seitenwandabschnitt 12 oberhalb der Sicke und einem unteren Seitenwandabschnitt 15 unterhalb der Sicke. Die jeweiligen Seitenwandabschnitte 11, 12 bzw. 14, 15 haben wie man sieht eine geringere Materialstärke. Außerdem ist die Profilnaht 18 erkennbar, wobei an dieser Profilnaht 18 jeweils die Enden der äußeren Abschnitte 19a, 19c des Bandeisen 19, von dem ausgegangen wird, zusammentreffen.

Das Bandeisen 19 gemäß Fig. 2 wird durch Rollformen in meist mehreren Verfahrensschritten so profiliert, daß das geschlossene Rechteckprofil 10 gemäß Fig. 1 entsteht. Wie man aus Fig. 2 erkennen kann sind zwei Bereiche 19d bzw. 19e mit stärkerer Materialstärke bereits in dem Bandeisen 19 vorgesehen, von dem ausgegangen wird. Diese beiden Abschnitte 19d, 19e größerer Materialstärke bilden in dem Profil 10 die obere Wandung 16 und die untere Wandung 17. Diese Abschnitte mit größerer Materialstärke sind also in dem fertigen Profil 10 dort angeordnet, wo sie zur Erzielung eines erhöhten Biegemoments benötigt werden, während die Seitenwände 12, 15 bzw. 11, 14 in geringerer Materialstärke ausgeführt werden können, so daß Material für das Profil 10 eingespart wird, denn die Seitenwände tragen beide im Profil 10, wenn es hochkant angeordnet wird gemäß der Darstellung in Fig. 1 weniger zum Biegemoment bei.

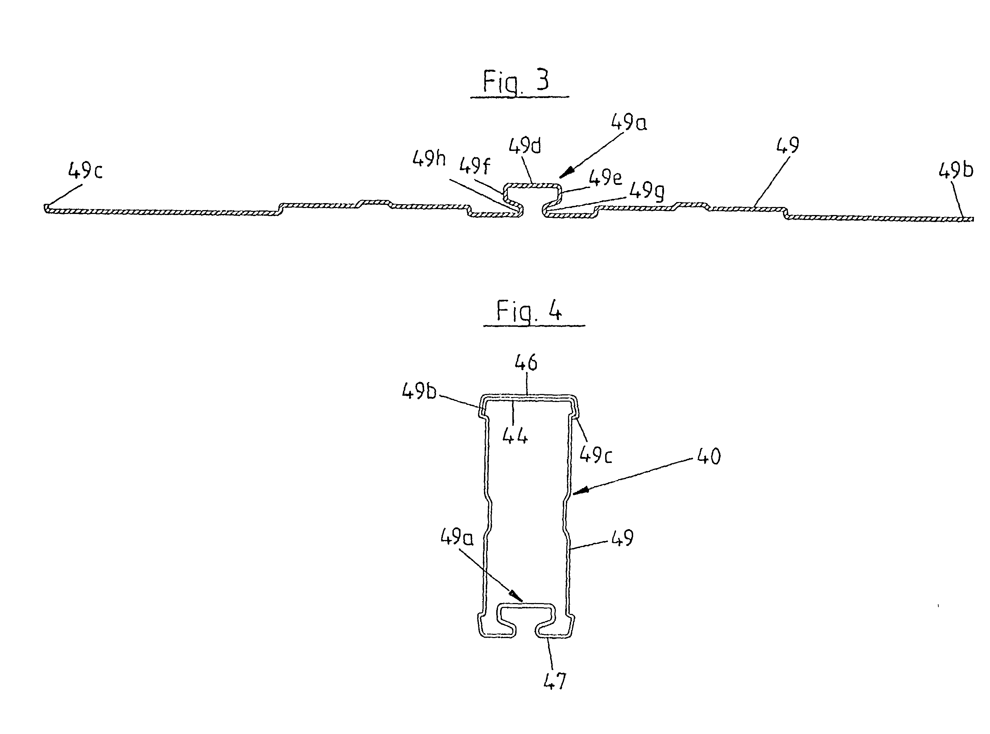

Es wird nun nachfolgend ein weiteres Ausführungsbeispiel der vorliegenden Erfindung unter Bezugnahme auf die Figur 3 bis 5 näher beschrieben. Fig. 3 zeigt ein weiteres Ausgangsbandeisen 49 aus dem ein Stahlträgerprofil gemäß der Erfindung profiliert werden kann. Dieses Ausgangsbandeisen 49 ist bereits durch Vorprofilieren aus einem flachen Bandeisen erhalten worden. Bei diesem Vorprofilieren hat das Ausgangsbandeisen 49 etwa im mittleren Bereich eine Anformung in Form einer Schlaufe 49a erhalten. Wie man sieht ist diese etwa schlaufenförmige Anformung 49a so ausgebildet, daß ein Abschnitt 49d des Bandeisens im mittleren Bereich der Anformung etwa parallel zu den übrigen weitgehend flachen Bereichen des Bandeisens verläuft. Etwa rechtwinklig nach unten schließen sich daran an die beiden Seitenwandabschnitte 49e, 49f der Schlaufe. Unterhalb dieser Seitenwandabschnitte 49e, 49f ist die Wandung des Bandeisens an beiden Seiten jeweils noch einmal einwärts abgekröpft, so daß sich eine Einschnürung ergibt, im Bereich derer die abgekröpften Abschnitte 49g, 49h des Bandeisens näher aneinanderliegen als die darüberliegenden Seitenwandabschnitte 49e, 49f.

Aus diesem Ausgangsbandeisen 49 wird nun ein erfindungsgemäßes Stahlträgerprofil 40 profiliert wie es in Fig. 4 dargestellt ist. Wie man sieht, liegt die schlaufenförmige Anformung 49a im Bereich der unteren Wandung 47 des fertig profilierten Stahlträgerprofils, so daß dort sich wesentlich mehr Material befindet als bei einer einfachen unteren Wandung und das Trägheitsmoment entsprechend erhöht wird.

Wie man weiterhin aus Fig. 4 erkennen kann, erfolgt das Profilieren des Ausgangsbandeisens 49 derart, daß sich dessen beide Endabschnitte 49b bzw. 49c im Bereich der oberen Wandung des Stahlträgerprofils 40 überlappen. Diese obere Wandung des Stahlträgerprofils 40 ist damit doppellagig mit der oberen Lage 46, die aus dem Endabschnitt 49c des Ausgangsbandeisens 49 gebildet wird und mit einer unteren Lage 44, die aus dem Endabschnitt 49b des Ausgangsbandeisens 49 gebildet wird. Das fertige Stahlträgerprofil 40 hat somit eine obere doppellagige Wandung, die zu einem erhöhten Trägheitsmoment des Profils führt, wobei jedoch das Stahlträgerprofil 40 aus nur einem Ausgangsbandeisen in aufeinanderfolgenden Profilierarbeitsgängen profiliert werden kann und somit sowohl der Aufwand im Herstellungsverfahren als auch die benötigte Materialmenge für das Stahlträgerprofil minimiert werden. Außerdem hat diese Variante der Erfindung noch den Vorteil, daß nach dem Profilieren keine Schweißnaht zur Verbindung wie bei aneinanderstoßenden Endabschnitten des Ausgangsbandeisens notwendig ist.

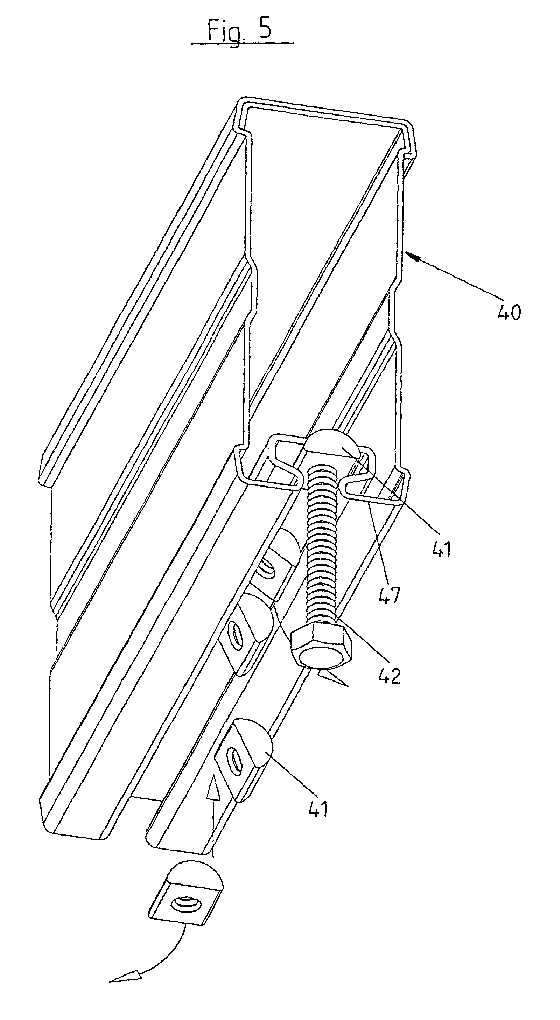

Die etwa schlaufenförmige Anformung im Bereich der unteren Wandung 47 des Stahlträgerprofils 40 hat bei Anwendungen weitere Vorteile. Eine mögliche Anwendung ist in Fig. 5 dargestellt. Wie man sieht kann man diese Anformung aufgrund der Schlaufenform ähnlich wie eine schwalbenschwanzförmige Nut nutzen, um dort z. B. Muttern 41 von schraubenförmigen Befestigungselementen 42 einzuschieben. Ein solches Stahlträgerprofil 40 kann z. B. als Regalholm Verwendung finden und hat dann den Vorteil, daß ein zusätzlicher Arbeitsgang für die Anbringung einer solchen Nut bzw. eines Schlitzes entfallen kann. Die Mutter 41 der Befestigungsschraube wird wie man sieht durch eine Schwenkbewegung in die Nut eingeschoben und bei Ausübung einer Zugkraft durch Anziehen der Schraube 42 wird die Mutter 41 in der Nut gehalten.

## Patentansprüche

1. Stahlträgerprofil in Form eines Holms mit etwa kastenförmigem Querschnitt, wobei dieses hergestellt ist ausgehend von Bandeisen durch Profilieren und das Stahlträgerprofil in wenigstens einem Wandabschnitt eine größere Materialstärke aufweist als in den übrigen Wandabschnitten,
wobei das Stahlträgerprofil weiterhin einen hochkant angeordneten kastenförmigen Querschnitt hat,
**dadurch gekennzeichnet, daß** die schmale obere Wand (16) und/oder die schmale untere Wand (17) eine größere Materialstärke aufweisen als einer oder mehrere der rechten beziehungsweise linken Seitenwandabschnitte (11, 12),
wobei das Stahlträgerprofil hergestellt wurde durch Profilieren eines Ausgangsbandeisens (19), das Bereiche (19d, 19e) größerer Materialstärke und Bereiche (19a, 19b, 19c) geringerer Materialstärke aufweist.

2. Verfahren zur Herstellung eines Stahlträgerprofils in Form eines Holms mit etwa kastenförmigem Querschnitt, bei dem man ausgeht von Bandeisen und dieses durch Umformen zu einem etwa kastenförmigen Profil profiliert, wobei das Stahlträgerprofil in wenigstens einem Wandabschnitt eine größere Materialstärke aufweist als in den übrigen Wandabschnitten und das Stahlträgerprofil einen hochkant angeordneten kastenförmigen Querschnitt hat und die schmale obere Wand und/oder die schmale untere Wand eine größere Materialstärke aufweisen als einer oder mehrere der rechten beziehungsweise linken Seitenwandabschnitte,
**dadurch gekennzeichnet, daß** man ausgeht von einem einstückigen Bandeisen (19) mit wenigstens einem Bereich (19d, 19e) größerer Materialstärke und wenigstens einem Abschnitt (19a, 19b, 19c) geringerer Materialstärke und dieses durch Umformen zu dem etwa kastenförmigen Profil (10) profiliert.

3. Stahlträgerprofil nach Anspruch 1, **dadurch gekennzeichnet, daß** das Stahlträgerprofil (40) wenigstens im Bereich einer schmalen oberen Wandung sich überlappende doppellagige Abschnitte (44, 46) aufweist.

4. Stahlträgerprofil nach Anspruch 3, **dadurch gekennzeichnet, daß** dieses im Bereich seiner unteren Wandung (47) eine vorzugsweise schlaufenförmige Anformung nach innen aufweist, die eine nach außen hin offene Nut des Stahlträgerprofils (47) vorzugsweise zur Aufnahme von Befestigungselementen (41) oder dergleichen bildet.

5. Verfahren zur Herstellung eines Stahlträgerprofils nach Anspruch 2, **dadurch gekennzeichnet, daß** man zunächst ausgeht von einem Bandeisen (49) mit durchgehend gleichbleibender Materialstärke und man anschließend das Bandeisen (49) so zu einem Stahlträgerprofil (40) profiliert, daß sich die endseitigen Abschnitte (49b, 49c) des Ausgangsbandeisens (49) im Stahlträgerprofil (40) im Bereich der oberen Wandung zu doppellagigen Abschnitten (44, 46) überlappen.

6. Verfahren zur Herstellung eines Stahlträgerprofils nach Anspruch 5, **dadurch gekennzeichnet, daß** dieses hergestellt wird aus einem Ausgangsbandeisen (49), das vorprofiliert wurde und in seinem etwa mittleren Abschnitt wenigstens eine vorzugsweise etwa schlaufenförmige Anformung (49a) aufweist und dann das Ausgangsbandeisen (49) so profiliert wird, daß diese etwa schlaufenförmige Anformung die untere Wandung (47) des Stahlträgerprofils bildet und darunter eine nach außen offene Nut gebildet ist.

## Claims

1. Steel-support profile in the form of a beam with an approximately box-like cross section, said profile being produced from strip steel by profiling, and the steel-support profile, in at least one wall portion, having a greater material thickness than in the rest of the wall portions, the steel-support profile furthermore having a box-like cross section which is arranged on edge, **characterized in that** the narrow top wall (16) and/or the narrow bottom wall (17) have a greater material thickness than one or more of the right-hand and left-hand side-wall portions (11, 12), the steel-support profile having been produced by profiling an initial strip-steel sheet (19), which has regions (19d, 19e) of greater material thickness and regions (19a, 19b, 19c) of lesser material thickness.

2. Method of producing a steel-support profile in the form of a beam with an approximately box-like cross section, in the case of which the starting material used is strip steel and this is profiled to give an approximately box-like profile by a forming process, the steel-support profile, in at least one wall portion, having a greater material thickness than in the rest of the wall portions, and the steel-support profile having a box-like cross section which is arranged on edge, and the narrow top wall and/or the narrow bottom wall having a greater material thickness than one or more of the right-hand and left-hand side-wall portions, **characterized in that** the starting material is a single-piece strip-steel sheet (19) with at least one region (19d, 19e) of greater material thickness and at least one portion (19a, 19b, 19c) of lesser material thickness, and said strip-steel sheet is profiled to give the approximately box-like profile (10) by a forming process.

3. Steel-support profile according to Claim 1, **characterized in that** the steel-support profile (40) has overlapping double-layered portions (44, 46) at least in the region of a narrow top wall.

4. Steel-support profile according to Claim 3, **characterized in that**, in the region of its bottom wall (47), it has an inwardly directed preferably loop-like formation which forms an outwardly open groove of the steel-support profile (47) preferably for accommodating fastening elements (41) or the like.

5. Method of producing a steel-support profile according to Claim 2, **characterized in that** the starting material used is a strip-steel sheet (49) with a constant material thickness throughout, and the strip-steel sheet (49) is then profiled to give a steel-support profile (40) such that the end portions (49b, 49c) of the initial strip-steel sheet (49) overlap in the steel-support profile (40) in the region of the top wall to give double-layered portions (44, 46).

6. Method of producing a steel-support profile according to Claim 5, **characterized in that** it is produced from an initial strip-steel sheet (49) which has been profiled beforehand and, in its approximately central portion, has at least one preferably approximately loop-like formation (49a), and then the initial strip-steel sheet (49) is profiled such that said approximately loop-like formation forms the bottom wall (47) of the steel-support profile and an outwardly open groove is formed therebeneath.

## Revendications

1. Profilé de support en acier, en forme de longeron de section transversale approximativement en forme de caisse, celui-ci étant fabriqué à partir de feuillard d'acier par profilage et le profilé de support en acier présentant, sur au moins une portion de paroi, une épaisseur de matériau plus importante que dans les autres portions de paroi, le profilé de support en acier ayant en outre une section transversale en forme de caisse disposée de chant, **caractérisé en ce que** la paroi supérieure étroite (16) et/ou la paroi inférieure étroite (17) présentent une épaisseur de matériau plus importante qu'une ou plusieurs des portions de parois latérales droite, respectivement gauche (11, 12), le profilé de support en acier ayant été fabriqué par profilage d'un feuillard d'acier de départ (19), qui présente des régions (19d, 19e) de plus grande épaisseur de matériau et des régions (19a, 19b, 19c) de moindre épaisseur de matériau.

2. Procédé de fabrication d'un profilé de support en acier en forme de longeron de section transversale approximativement en forme de caisse, dans lequel on part de feuillard d'acier et on profile celui-ci par déformation pour donner un profilé approximativement en forme de caisse, le profilé de support en acier présentant, dans au moins une portion de paroi, une épaisseur de matériau plus importante que dans les autres portions de paroi et le profilé de support en acier ayant une section transversale en forme de caisse disposée de chant et la paroi supérieure étroite et/ou la paroi inférieure étroite présentant une épaisseur de matériau plus importante qu'une ou plusieurs des portions de parois latérales droite, respectivement gauche,
**caractérisé en ce que** l'on part d'un feuillard d'acier d'une seule pièce (19) avec au moins une région (19d, 19e) de plus grande épaisseur de matériau et au moins une portion (19a, 19b, 19c) de moindre épaisseur de matériau et l'on profile celui-ci par déformation pour donner un profilé (10) approximativement en forme de caisse.

3. Profilé de support en acier selon la revendication 1, **caractérisé en ce que** le profilé de support en acier (40) présente au moins dans la région d'une paroi supérieure étroite des portions à double couche se chevauchant (44, 46).

4. Profilé de support en acier selon la revendication 3, **caractérisé en ce que** celui-ci présente, dans la région de sa paroi inférieure (47), une formation vers l'intérieur de préférence en forme de boucle, qui forme une rainure du profilé de support en acier (47) ouverte vers l'extérieur, de préférence pour recevoir des éléments de fixation (41) ou similaires.

5. Procédé de fabrication d'un profilé de support en acier selon la revendication 2, **caractérisé en ce que** l'on part tout d'abord d'un feuillard d'acier (49) avec une épaisseur de matériau uniforme en continu et l'on profile ensuite le feuillard d'acier (49) pour donner un profilé de support en acier (40) de telle sorte que les portions de bout (49b, 49c) du feuillard d'acier de départ (49) se chevauchent dans le profilé de support en acier (40) dans la région de la paroi supérieure pour donner des portions à double couche (44, 46).

6. Procédé de fabrication d'un profilé de support en acier selon la revendication 5, **caractérisé en ce que** celui-ci est fabriqué à partir d'un feuillard d'acier de départ (49), qui a été profilé initialement et qui présente, dans sa portion approximativement centrale, au moins une formation (49a) de préférence approximativement en forme de boucle puis le feuillard d'acier de départ (49) est profilé de telle sorte que cette formation approximativement en forme de boucle forme la paroi inférieure (47) du profilé de support en acier et forme par-dessous une rainure ouverte vers l'extérieur.
